(19) Europäisches Patentamt
European Patent Office
Office européen des brevets

(11) EP 3 625 055 B1

(12) EUROPEAN PATENT SPECIFICATION

(45) Date of publication and mention of the grant of the patent:
**25.10.2023 Bulletin 2023/43**

(21) Application number: **18724267.2**

(22) Date of filing: **18.05.2018**

(51) International Patent Classification (IPC):
***B32B 27/32*** (2006.01) ***C08L 23/14*** (2006.01)
***B32B 27/08*** (2006.01) ***B32B 27/18*** (2006.01)
***B32B 27/24*** (2006.01)

(52) Cooperative Patent Classification (CPC):
(C-Sets available)
**C08L 23/142; B32B 27/08; B32B 27/18; B32B 27/24; B32B 27/32;** B32B 2250/03; B32B 2250/05; B32B 2250/242; B32B 2307/21; B32B 2307/31; B32B 2307/406; B32B 2307/412; B32B 2307/518; B32B 2307/732; B32B 2307/746;

(Cont.)

(86) International application number:
**PCT/EP2018/063194**

(87) International publication number:
**WO 2018/211107 (22.11.2018 Gazette 2018/47)**

# (54) PROPYLENE RANDOM COPOLYMER COMPOSITION WITH REDUCED SEALING INITIATION TEMPERATURE

PROPYLEN-RANDOM-COPOLYMER-ZUSAMMENSETZUNG MIT VERRINGERTER VERSIEGELUNGSINITIIERUNGSTEMPERATUR

COMPOSITION DE COPOLYMÈRE ALÉATOIRE DE PROPYLÈNE À FAIBLE TEMPÉRATURE D'INITIATION D'ÉTANCHÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2017 EP 17171957**

(43) Date of publication of application:
**25.03.2020 Bulletin 2020/13**

(73) Proprietors:
- **ABU DHABI POLYMERS CO. LTD (BOROUGE) LLC.**
  **Abu Dhabi (AE)**
- **Borealis AG**
  **1020 Vienna (AT)**

(72) Inventor: **VAN HOUCKE, Daniel**
**Abu Dhabi (AE)**

(74) Representative: **Maiwald GmbH**
**Elisenhof**
**Elisenstraße 3**
**80335 München (DE)**

(56) References cited:
**EP-A1- 2 808 352**
**EP-A1- 2 896 651**
**WO-A1-2011/036077**
**WO-A1-2012/031953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2439/00; B32B 2439/70; C08L 2201/10;
C08L 2203/10; C08L 2203/162

C-Sets
**C08L 23/142, C08L 23/14, C08L 23/18;**
**C08L 23/142, C08L 23/18**

## Description

The present invention is directed to a polyolefin composition which is suitable as sealing layer of a multilayer film providing improved, i.e., reduced sealing initiation temperature. The polyolefin composition comprises a random copolymer of propylene with ethylene and a polymer of 1-butene. The present invention is also directed to oriented and non-oriented films comprising the polyolefin composition and to the use of a polymer of 1-butene in a polyolefin composition comprising a random copolymer of propylene with ethylene for reducing the sealing initiation temperature of an oriented or non-oriented film comprising the polyolefin composition.

It is known in the art that films based on polyolefin compositions are widely used for several applications. One of these applications is packaging, in particular food packaging such as wrapping films and containers. Such films are known for their well-balanced properties like strength, stiffness, transparency and resistance to impact, among others.

WO 2011/036077 A1 discloses heat-sealable polyolefin films for packaging applications. The underlying polyolefin composition forming the heat-sealable layer of the film is a blend of a heterophasic propylene copolymer and of a polymer of 1-butene. The heterophasic propylene copolymer comprises a propylene homopolymer or a propylene copolymer with ethylene and/or one or more $C_4$-$C_{10}$ $\alpha$-olefin(s), having a solubility in xylene at room temperature equal to or less than 10 wt%, and a copolymer of ethylene with propylene and/or one or more $C_4$-$C_{10}$ $\alpha$-olefin(s), containing 50-80 wt% of ethylene derived units, and having a solubility in xylene at room temperature of 50-80 wt%. The polymer of 1-butene is a 1-butene homopolymer or a 1-butene copolymer having a content of 1-butene derived units of 75 wt% or more and a flexural modulus of 70 MPa or less.

EP 2 896 651 A1 discloses 1-butene $\alpha$-olefin copolymer compositions having excellent low-temperature heat sealing properties. These 1-butene $\alpha$-olefin copolymer compositions comprise a blend of at least one olefin polymer and of a 1-butene $\alpha$-olefin copolymer. The olefin polymer is selected from propylene polymers containing 50 mol% or more of propylene and ethylene polymers containing 50 mol% or more of ethylene. The 1-butene $\alpha$-olefin copolymer contains 99.9 to 70 mol% of 1-butene and 0.1 to 30 mol% of one or more $\alpha$-olefins selected from ethylene, propylene and $C_5$ to $C_{12}$ $\alpha$ -olefins. As far as solutions are concerned, wherein the olefin polymer is based on propylene polymers, EP 2 896 651 A1 discloses merely solutions wherein the propylene polymer is a propylene-ethylene-1-butene random copolymer and wherein the amount of the 1-butene $\alpha$-olefin copolymer in the composition is rather high, i.e., at least 15 wt%.

WO 2012/031953 A1 discloses polyolefin compositions comprising a propylene copolymer and a 1-butene polymer, which are useful in the preparation of heat-sealable films. The propylene copolymer is a copolymer of propylene and 1-hexene containing 3 to 9 wt% of units derived from 1-hexene. The 1-butene polymer is a 1-butene homopolymer or a 1-butene copolymer.

EP 2 808 352 A1 and WO 2014/191506 A1 disclose a bimodal random propylene copolymer and its use for making cast films for packaging applications and thereby provide a solution which is cheaper than comparable solutions based on a terpolymer, e.g. a propylene polymer having both ethylene and an alpha-olefin as comonomers.

However, current industrial practice of high speed packaging lines requires a film, e.g. a sealing layer of a multilayer film, with a suitably low sealing initiation temperature (SIT), e.g. of around 105 °C. Again, there are solutions, which are based on polyolefin terpolymers. There is, however, no comparable solution known, which is based on a propylene copolymer like a propylene ethylene random copolymer.

Attempts have been made to lower the sealing initiation temperature of a propylene ethylene random copolymer by adding elastomers or plastomers. The disadvantage of this approach is that the efficiency is limited and still better results are obtained with terpolymers. The efficiency turned out to be also very much dependent on process parameters like type of equipment used and set-up of the line. These difficulties have been observed both for non-oriented films and for oriented films like biaxially oriented polypropylene (BOPP) films.

Further on, upon addition of elastomers or plastomers, not only the sealing initiation temperature is hard to decrease but also other important properties are often deteriorated, like optical properties and hot tack properties. In order to achieve an acceptable reduction of the sealing initiation temperature, it is often necessary to add a quantity of much more than 10 wt% of an elastomer or plastomer. This leads to very high costs and/or feeding difficulties at the converter side.

Therefore, there is still a need for improved and economical polyolefin compositions, which provide reduced sealing initiation temperature without compromising other important properties like optical and hot tack properties.

Thus, the object of the present invention is to overcome the drawbacks of the state of the art.

The present invention is based on the finding that the object can be solved by provision of a polyolefin composition comprising a random copolymer of propylene with ethylene and a polymer of 1-butene as further defined below.

Accordingly, the present invention is in one aspect directed to a polyolefin composition comprising

(A) 88 to 93 wt% based on the weight of the polyolefin composition of a random copolymer of propylene, wherein the comonomer in the random copolymer of propylene is ethylene and there is only one comonomer, having

- a comonomer content of 1.0 to 10 wt% based on the weight of the random copolymer of propylene (R-PP),
- a xylene cold soluble content of below 10 wt%,
  and

(B) 7.0 to 12 wt% based on the weight of the polyolefin composition of a polymer of 1-butene having

- a weight average molecular weight $M_w$ of 100,000 to 300,000 g/mol, and
- a molecular weight distribution $M_w/M_n$ of below 6.0.

The polyolefin composition according to the present invention provides improved, i.e., reduced, sealing initiation temperature without deteriorating other important properties like optical and hot tack properties of the polyolefin composition. Preferably, the polyolefin composition of the present invention further provides an industrially feasible and economical solution, i.e. enables to avoid the use of expensive terpolymers or copolymers comprising high amounts of expensive additives.

The term "random" indicates that the comonomer of the random copolymer of propylene (R-PP) is randomly distributed within the copolymer of propylene. The term random is understood according to IUPAC (Glossary of basic terms in polymer science; IUPAC recommendations 1996).

Thereby, the random copolymer of propylene (R-PP) includes a fraction, which is insoluble in xylene, i.e., xylene cold insoluble (XCU) fraction, in an amount of at least 90 wt%, based on the total amount of the random copolymer of propylene (R-PP).

Hence, the xylene cold soluble (XCS) content of the random copolymer of propylene (R-PP) is below 10 wt%, like in the range from 2.0 to 8.0 wt%. The XCS content will be usually at least 0.5 wt%. The weight percentage is based on the total weight of the random copolymer of propylene (R-PP).

As known for a skilled person, a random copolymer is different from heterophasic polypropylene. Generally, a heterophasic polypropylene is a propylene copolymer comprising a propylene homo- or random copolymer matrix component (1) and an elastomeric copolymer component (2) of propylene with one or more of ethylene and $C_4$-$C_8$-olefin comonomers, wherein the elastomeric (amorphous) copolymer component (2) is dispersed in said propylene homo- or random copolymer matrix polymer (1). The presence of an elastomeric phase or of the so-called inclusions is for instance visible by high resolution microscopy, like electron microscopy or atomic force microscopy. A random copolymer does not contain an elastomeric polymer phase dispersed therein.

Thereby, the term "random copolymer of propylene" according to the present invention excludes all heterophasic systems. In other words the random copolymer of propylene (R-PP) does not comprise an elastomeric phase. Accordingly, the random copolymer of propylene (R-PP) is monophasic.

As indicated already above, the presence of second phases or the so-called inclusions are for instance visible by high resolution microscopy, like electron microscopy or atomic force microscopy, but also by dynamic mechanical thermal analysis (DMTA). Specifically in DMTA the presence of a multiphase structure can be identified by the presence of at least two distinct glass transition temperatures.

Accordingly, it is preferred that the random copolymer of propylene (R-PP) has no glass transition temperature below -30 °C, preferably below -25 °C, more preferably below -20 °C.

The random copolymer of propylene (R-PP) can be any commercially available polymer fulfilling the above-mentioned requirements. It can be produced using conventional catalyst systems like Ziegler-Natta catalysts or single-site catalysts like metallocene catalysts.

As indicated above, the random copolymer of propylene (R-PP) has a comonomer content in the range from 1.0 to 10 wt%. It is preferred that the random copolymer of propylene (R-PP) has a comonomer content of at least 1.6 wt%, more preferably of at least 2.0 wt%, still more preferably of at least 3.0 wt%, further preferred at least 4.0 wt%. A preferred range of comonomer content may be for example the range from 2.0 to 10 wt% or 3.0 to 10 wt%, preferably from 3.0 wt% to 8.3 wt%, further preferred from 3.5 wt% to 8.0 wt%, even further preferred from 4.0 wt% to 6.0 wt%. It is further preferred that the comonomer content is not higher than 8.3 wt%, more preferably not higher than 6.0 wt%. The weight percentage is based on the total weight of the random copolymer of propylene (R-PP).

The random copolymer of propylene (R-PP) has preferably a melt flow rate $MFR_2$ of from 1.0 to 50 g/10 min, more preferably of from 5.0 to 15 g/10 min, even more preferably of 5.0 to 11 g/10 min, as measured at 230 °C (2.16 kg) according to ISO 1133.

The random copolymer of propylene (R-PP) preferably exhibits two melting temperatures $T_m$ which differ from each other as determined by differential scanning calorimetry according to ISO 11357-3.

Preferably, the two melting temperatures $T_m$ of the random copolymer of propylene (R-PP) differ from each other by at least 4.0 °C, more preferably in the range from 5.0 to 40 °C, even more preferably from 5.0 to 20 °C, still more preferably in the range from 5.0 to 15 °C.

For instance, the higher melting temperature ($T_m$) may range from 142 to 165 °C, preferably from 142 to 155

°C, more preferably from 146 to 152 °C.

For instance, the lower melting temperature ($T_m$) may range from 125 to below 141 °C, preferably from 130 to below 141 °C, more preferably from 137 to 141 °C.

It is believed that the bimodal melting temperature ($T_m$) arises from two distinct crystallite populations within the random copolymer of propylene (R-PP).

The random copolymer of propylene (R-PP) is a propylene ethylene random copolymer (R-PP), i.e., the comonomer is ethylene and there is only one comonomer.

Hence, the term "propylene ethylene random copolymer" indicates that the copolymer consists of two monomer units only, namely the propylene and ethylene unit. In other words, the propylene ethylene random copolymer (R-PP) contains no further comonomers and thus terpolymers are excluded.

As indicated above, the random copolymer of propylene (R-PP) has a comonomer content in the range from 1.0 to 10 wt%, i.e., the propylene ethylene random copolymer (R-PP) has an ethylene content in the range from 1.0 to 10 wt%. It is herein preferred that the propylene ethylene random copolymer (R-PP) has an ethylene content of at least 1.6 wt%, more preferably of at least 2.0 wt%, still more preferably of at least 3.0 wt%. A preferred range of ethylene content is the range from 3.0 to 10 wt%. It is further preferred that the ethylene content is not higher than 8.3 wt%, more preferably not higher than 6.0 wt%. The weight percentage is based on the total weight of the propylene ethylene random copolymer (R-PP).

In one preferred embodiment, the propylene ethylene random copolymer (R-PP) comprises a propylene ethylene random copolymer fraction (R-PP1) and a propylene ethylene random copolymer fraction (R-PP2) in a weight ratio [(R-PP1)/(R-PP2)] of 30/70 to 70/30, wherein the ethylene content of the propylene ethylene random copolymer fraction (R-PP1) is equal to or differs, preferably differs, from the ethylene content of the propylene ethylene random copolymer fraction (R-PP2).

Hence, in a preferred embodiment of the present invention, the propylene ethylene random copolymer (R-PP) comprises, preferably comprises as only polymer components, more preferably consists of as only polymer components, 30 to 70 wt% of R-PP1, preferably 30 to 60 wt% of R-PP1, more preferably 40 to 50 wt% of R-PP1, and 30 to 70 wt% of R-PP2, preferably 40 to 70 wt%, more preferably 50 to 60 wt% of R-PP2.

The melt flow rate $MFR_2$ of both fractions R-PP1 and R-PP2 as measured at 230 °C (2.16 kg) according to ISO 1133 may be about the same or may differ, such as by 0.1 to 5.0 g/10 min, or 0.1 to 3.0 g/10 min.

The ethylene content of both fractions R-PP 1 and R-PP2 may be about the same or may differ. Preferably, the ethylene content of both fractions R-PP1 and R-PP2 differs by 0 to 5 wt%. For instance, the ethylene content of the propylene ethylene random copolymer fraction (R-PP1) differs from the ethylene content of the propylene ethylene random copolymer fraction (R-PP2) within a range from 0 to 2.55 wt%, or preferably within a range from 0 to1.45 wt%, or preferably from 0.36 to 1.45 wt%.

In one preferred embodiment, one fraction, R-PP1, has an ethylene content ranging from 1.0 to 8.0 wt%, more preferably in the range from 1.0 to 6.0 wt%, even more preferably in the range from 1.6 to 4.0 wt%, based on the weight of R-PP1. The other fraction, R-PP2, then has an ethylene content ranging from 1.0 to 10 wt%, more preferably in the range from 1.0 to 8.0 wt%, even more preferably in the range from 1.6 to 6.0 wt%, based on the weight of R-PP2.

In one preferred embodiment the xylene cold soluble (XCS) content of the propylene ethylene random copolymer fraction (PP1) having the lower ethylene comonomer content is preferably equal or below 10 wt%, more preferably equal or below 8.0 wt%, like in the range from 2.0 to 8.0 wt%, like in the range from 2.8 to 6.0 wt%.

The XCS content will be usually at least 0.5 wt%. The weight percentage is based on the total weight of the propylene ethylene random copolymer fraction (PP1).

In one preferred embodiment the xylene cold soluble (XCS) content of the propylene ethylene random copolymer fraction (R-PP2) is preferably equal or below 12 wt%, like in the range from 2.0 to 12 wt%, like in the range from 2.8 to 11.5 wt%, for example in the range from 3.5 to 9.0 wt%. The XCS content will be usually at least 0.5 wt%. The weight percentage is based on the total weight of the propylene ethylene random copolymer fraction (R-PP2).

In a preferred embodiment the random copolymer of propylene (R-PP) is non-visbroken. As known by the person skilled in the art, visbreaking can be achieved e.g. by the use of peroxide.

As indicated already above, the polyolefin composition according to the present invention comprises a polymer of 1-butene.

The polymer of 1-butene according to the present invention has a weight average molecular weight $M_w$ of 100,000 to 300,000 g/mol, preferably of 150,000 to 250,000 g/mol, more preferably of 175,000 to 225,000 g/mol.

The polymer of 1-butene according to the present invention has a molecular weight distribution $M_w/M_n$ of below 6.0, preferably of below 4.5, more preferably of below 3.5. The molecular weight distribution $M_w/M_n$ will be usually at least 1.5. The molecular weight distribution as used herein is the ratio of weight average molecular weight $M_w$ and number average molecular weight $M_n$.

The polymer of 1-butene according to the present invention preferably has a melt flow rate $MFR_2$ of at least 1 g/10 min, more preferably of at least 2 g/10 min, even more preferably of at least 3 g/10 min, as measured at 190 °C

(2.16 kg) according to ISO 1133. The polymer of 1-butene according to the present invention will usually have a melt flow rate $MFR_2$ of 10 g/10 min or below, like 8 g/10 min or below, or 6 g/10 min or below, as measured at 190 °C (2.16 kg) according to ISO 1133. The polymer of 1-butene according to the present invention may for example have a melt flow rate $MFR_2$ of between 2.0 g/10 min and 10 g/10min, preferably between 2.5 g/10 min and 8.0 g/10 min, further preferred between 3.0 and 6.0 g/10 min as measured at 190 °C (2.16 kg) according to ISO 1133.

The polymer of 1-butene according to the present invention may be a homopolymer of 1-butene or preferably a copolymer of 1-butene with one or more comonomers, preferably selected from ethylene and a $C_3$-$C_{12}$-alpha-olefin, especially preferred a copolymer of 1-butene with ethylene or propylene, further preferred a copolymer of 1-butene and ethylene.

Such a polymer of 1-butene according to the present invention may be a commercially available product, such as TAFMER BL2491M, available from Mitsui, or can be produced in a conventional manner using a conventional polymerization process and polymerization reactor as well described in the polymer literature. The choice of the process conditions is within the skills of a skilled person.

The sum of the random copolymer of propylene (R-PP) and the polymer of 1-butene makes up the main part of the inventive polyolefin composition. Accordingly, it is preferred that the amount of the sum of the random copolymer of propylene (R-PP) and the polymer of 1-butene is at least 80 wt%, more preferably at least 90 wt%, yet more preferably at least 95 wt%, based on the total weight of the inventive polyolefin composition. The remaining part up to 100 wt% is preferably additives as defined in more detail below.

It is preferred that the polyolefin composition of the present invention does - apart from the random copolymer of propylene (R-PP) and the polymer of 1-butene - not contain any further polymeric material.

"Polymeric material" as used herein excludes any carrier polymer(s) of optional additive, e.g. master batche(s) of additive(s) together with the carrier polymer, optionally present in the polyolefin composition. Such optional carrier polymer(s) are calculated to the amount of the respective additive based on the amount (100 %) of the polyolefin composition. Hence, polymers which are part of additive mixtures, e.g. carrier polymers in masterbatches, are excluded from the definition of "polymeric material".

The amount of the random copolymer of propylene (R-PP) is between 88 wt% and 93 wt% based on the weight of the polyolefin composition of the present invention.

The amount of the polymer of 1-butene in the polyolefin composition of the present invention is 7.0 to 12 wt% based on the weight of the polyolefin composition of the present invention.

Accordingly, the weight ratio between the polymer of 1-butene and the random copolymer of propylene (R-PP) is 0.08-0.14.

As it is believed that the bimodal melting temperature ($T_m$) of the random copolymer of propylene (R-PP) according to a preferred embodiment of the present invention arises from two distinct crystallite populations within the random copolymer of propylene (R-PP), it is preferred that the random copolymer of propylene (R-PP) is obtainable by a sequential polymerization process comprising at least two reactors connected in series, wherein said process comprises the steps of

(A) polymerizing in a first reactor (R-1) propylene and ethylene, and
obtaining said propylene ethylene random copolymer fraction (R-PP1),
(B) transferring said propylene ethylene random copolymer fraction (R-PP1) and unreacted comonomers from the first reactor into a second reactor (R-2),
(C) feeding to said second reactor (R-2) propylene and ethylene,
(D) polymerizing propylene and ethylene in said second reactor (R-2) and in the presence of said propylene ethylene random copolymer fraction (R-PP1), and obtaining said propylene ethylene random copolymer fraction (R-PP2), i.e. said propylene ethylene random copolymer (R-PP) comprising the propylene ethylene random copolymer fraction (R-PP1) and propylene ethylene random copolymer fraction (R-PP2),
wherein further

(i) the temperature in the first reactor (R-1) is preferably of more than 65 °C to equal or below 95 °C, more preferably of more than 70 °C to equal or below 90 °C,
(ii) the temperature in the second reactor (R-2) is preferably of equal or more than 75 °C to equal or below 100 °C, more preferably of equal or more than 80 °C to equal or below 95 °C,
(iii) in the first reactor (R-1) and second reactor (R-2) the polymerization takes place in the presence of a solid catalyst system (SCS) having a surface area measured according to ASTM D 3662 of less than 30 $m^2/g$,
wherein further

(I) said solid catalyst system (SCS) comprises

(Ia) a transition metal selected from one of the groups 4 to 6 of the periodic table (IUPAC),
(Ib) a metal which is selected from one of the groups 1 to 3 of the periodic table (IUPAC), and
(Ic) an internal electron donor (ID).

Accordingly, the instant random copolymer of propylene (R-PP) is preferably produced in a sequential polymerization process.

The term "sequential polymerization process" indicates that the random copolymer of propylene (R-PP) is produced in at least two reactors connected in series. More precisely the "term sequential polymerization process" indicates herein that the polymer of the first reactor (R-1), i.e. the propylene ethylene random copolymer fraction R-PP1, is directly conveyed with unreacted comonomers to the second reactor (R-2) in which the propylene ethylene random copolymer fraction R-PP2 is produced. Accordingly, a decisive aspect of the present process is the preparation of the propylene ethylene random copolymer (R-PP) in two different reactors, wherein the reaction material of the first reactor (R-1) is directly conveyed to the second reactor (R-2), and thus the random copolymer of propylene (R-PP) comprises two different fractions, namely R-PP1 and R-PP2. Accordingly, the present process comprises at least a first reactor (R-1) and a second reactor (R-2). In one specific embodiment the instant process consists of the two polymerization reactors (R-1) and (R-2). The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consists of" is only a closing formulation in view of the main polymerization reactors. In case of comprising a pre-polymerization reactor, R-PP1 means the sum of copolymers produced in the pre-polymerization reactor and the first polymerization reactor (R-1).

The first reactor (R-1) is preferably a slurry reactor (SR) and can be any continuous or simple stirred batch tank reactor or loop reactor operating in bulk or slurry. Bulk means a polymerization in a reaction medium that comprises of at least 60 wt%, preferably 100 wt% monomer. The slurry reactor (SR) is preferably a (bulk) loop reactor (LR).

The second reactor (R-2) and any subsequent reactor are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus, it is appreciated that the gas phase reactor is a fluidized bed type reactor preferably with a mechanical stirrer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Preferably in the first reactor (R-1), preferably in the slurry reactor (SR), like in the loop reactor (LR), the temperature is more than 65 °C, preferably equal or more than 68 °C, still more preferably in the range of equal or more than 65 °C to equal or below 95 °C, still more preferably in the range of equal or more than 65 °C to equal or below 90 °C, more preferably in the range of 65 to 80 °C, and more preferably in the range of 70 to 75 °C.

The pressure in the first reactor (R-1), preferably in the slurry reactor (SR), like in the loop reactor (LR), is within the range of 25 bar to 80 bar, preferably between 30 bar to 70 bar, more preferably 40 to 60 bar. Hydrogen can be added for controlling the molar mass in a manner known per se.

Subsequently, the reaction mixture from the first reactor (R-1) is transferred to the second reactor (R-2), i.e. to the gas phase reactor (GPR-1), whereby the temperature in the second reactor (R2) is preferably within the range of equal or more than 75 °C to 100 °C, more preferably within the range of equal or more than 80 °C to 95 °C, more preferably 80 to 90 °C.

Further it is preferred that in the second reactor (R-2), preferably in the gas phase reactor (GPR-1), the pressure is within the range of 5 bar to 50 bar, preferably between 15 bar to 40 bar, more preferably 20 to 30 bar. Hydrogen can be added for controlling the molar mass in a manner known per se.

The residence time can vary in both reactor zones.

In one preferred embodiment of the process for producing random copolymer of propylene (R-PP) the residence time in bulk reactor, e.g. loop, is in the range 0.2 to 4 hours, e.g. 0.3 to 1.5 hours, more preferably in the range of 0.6 to 1.5 hours, and the residence time in gas phase reactor (GPR) will generally be 0.2 to 6.0 hours, like 0.5 to 4.0 hours, more preferably 1 to 1.9 hours.

The conditions in the other gas phase reactors (GPR), if present, are similar to the second reactor (R-2).

Especially good results are achievable by the present process in case the instant process encompass a pre-polymerization (P) prior to the polymerization in the first reactor (R-1). The pre-polymerization (P) can be conducted in the first reactor (R-1), however it is preferred that the pre-polymerization (P) takes place in a separate reactor, so called pre-polymerization reactor (P-R). A pre-polymerization reactor is of smaller size compared to the first (R-1) and second (R-2) reactor, respectively. Preferably, the reaction volume of the pre-polymerization reactor (P-R) will be between 5 % and 30 % of the reaction volume of the first reactor (R-1), like the loop reactor. In said pre-polymerization reactor (P-R), the pre-polymerization (P) is performed in bulk or slurry as defined for the first reactor (R-1) above.

Further it is appreciated that the pre-polymerization temperature is rather low, i.e. equal or below 50 °C, more preferably between equal or more than 10 °C to equal or below 50 °C, yet more preferably between 12 to 45 °C, even

more preferably between 15 to 40 °C, like between 18 and 35 °C.

The pressure during pre-polymerization can be between 20 to 80 bar, preferably between 25 to 75 bar, like 30 to 70 bar, or 30 to 50 bar. Residence times can vary between 0.1 to 1.5 hours, like between 0.2 and 0.8 hours.

As indicated above in connection with the general description of the preferred polymerization process, one further preferred aspect of the present invention is that a specific catalyst system is used in the instant polymerization process.

The solid catalyst system (SCS) used comprises

(a) a transition metal selected from one of the groups 4 to 6, in particular of group 4 of the periodic table (IUPAC), preferably Ti,
(b) a metal which is selected from one of the groups 1 to 3 of the periodic table (IUPAC), preferably Mg,
(c) an internal electron donor (ID),
(d) optionally a cocatalyst, like an aluminum compound, and
(e) optionally an external donor, like an organo silane compound, especially an hydrocarbyloxy silane compound.

The metal is preferably brought in the solid catalyst system (SCS) as a metal compound (CM) which forms with the internal electron donor (ID) or its precursor (P-ID) a complex (C). In turn the transition metal is preferably brought in the solid catalyst system (SCS) as a transition metal compound (CT). Further information concerning this matter is provided below.

A remarkable feature of the preferred catalyst system (SCS) is that it is of solid form. In other words, for the random propylene ethylene copolymer (R-PP) polymerization an heterogeneous catalysis is applied, i.e. the aggregate state (solid state) of the catalyst system (SCS) differs from the aggregate state of the reactants, i.e. the propylene and ethylene. Different to known solid catalyst systems, the catalyst system (SCS) preferably used in the present invention is a so-called self-supported catalyst system, or in other words the solid catalyst system (SCS) used does not comprise in significant amounts catalytically inert material used normally as support material. Inert support material according to this invention is any material which is used to decrease solubility of the catalyst systems in media which are generally used in polymerization processes as well in common solvents like pentane, heptane and toluene. Typical inert support materials are organic and inorganic support materials, like silica, $MgCl_2$ or porous polymeric material. These support materials are generally used in amounts of at least 50 wt%, more preferably of at least 70 wt%. Accordingly, in the preparation of the solid catalyst system (SCS) preferably used in the present invention, no external support material is used and thus the amount of such an inert support material within the solid catalyst system (SCS) is of not more than 10.0 wt%, yet more preferably below 5.0 wt%, yet more preferably not detectable.

Typically the solid catalyst system (SCS) has a surface area measured according to the commonly known BET method with $N_2$ gas as analysis adsorptive (ASTM D 3663) of less than 30 $m^2/g$, e.g. less than 20 $m^2/g$. In some embodiments the surface area is more preferably of less than 15 $m^2/g$, yet more preferably of less than 10 $m^2/g$. In some other embodiments, the solid catalyst system shows a surface area of 5 $m^2/g$ or less, which is the lowest detection limit with the methods used in the present invention.

The solid catalyst particle (SCS) can be additionally or alternatively defined by the pore volume measured according to ASTM 4641. Thus it is appreciated that the solid catalyst particle (SCS) has a pore volume of less than 1.0 ml/g. In some embodiments the pore volume is more preferably less than 0.5 ml/g, still more preferably less than 0.3 ml/g and even less than 0.2 ml/g. In another preferred embodiment the pore volume is not detectable when determined according to ASTM 4641.

Moreover, the solid catalyst particle (SCS) typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m.

The solid catalyst system (SCS) is preferably obtainable, i.e. obtained, by a process comprising contacting

(a) a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof,
with
(b) a liquid transition metal compound (CT) or a solution of a transition metal compound (CT).

Accordingly one important aspect of the preparation of the preferred solid catalyst system is that neither the complex (C) nor the transition metal compound (CT) are present in solid form during the solid catalyst system (SCS) preparation, as it is the case for supported catalyst systems.

The solution of a complex (C) of the metal which is selected from one of the groups 1 to 3 of the periodic table

(IUPAC) and the internal electron donor (ID) is obtained by reacting a compound (CM) of said metal with said internal electron donor (ID) or a precursor (P-ID) thereof in an organic solvent.

The metal compound (CM) used for the preparation of the complex (C) may be any metal compound (CM) which is selected from one of the groups 1 to 3 of the periodic table (IUPAC). However it is preferred that the complex (C) is a Group 2 metal complex, even more preferred a magnesium complex. Accordingly it is appreciated that the metal compound (CM) used in the preparation of said complex (C) is a Group 2 metal compound, like a magnesium compound.

Thus, first a metal compound (CM) which is selected from one of the groups 1 to 3 of the periodic table (IUPAC), preferably from a Group 2 metal compound, like from a magnesium compound, containing preferably an alkoxy moiety is produced. More preferably the metal compound (CM) to be produced is selected from the group consisting of a Group 2 metal dialkoxide, like magnesium dialkoxide, a complex containing a Group 2 metal dihalide, like magnesium dihalide, and an alcohol, and a complex containing a Group 2 metal dihalide, like magnesium dihalide, and a Group 2 metal dialkoxide, like magnesium dialkoxide.

Thus, the metal compound (CM) which is selected from one of the groups 1 to 3 of the periodic table (IUPAC), preferably from the Group 2 metal compound, like from the magnesium compound, is usually titaniumless.

Most preferably, the magnesium compound is provided by reacting an alkyl magnesium compound and/or a magnesium dihalide with an alcohol. Thereby, at least one magnesium compound precursor, selected from the group consisting of a dialkyl magnesium $R_2Mg$, an alkyl magnesium alkoxide RMgOR, wherein each R is an identical or a different $C_1$ to $C_{20}$ alkyl, and a magnesium dihalide $MgX_2$, wherein X is a halogen, is reacted with at least one alcohol, selected from the group consisting of monohydric alcohols R'OH and polyhydric alcohols $R'(OH)_m$, wherein R' is a $C_1$ to $C_{20}$ hydrocarbyl group and m is an integer selected from 2, 3 ,4 ,5 and 6, to give said magnesium compound (CM). R' is the same or different in the formulas R'OH and $R'(OH)_m$. The R of the dialkyl magnesium is preferably an identical or different $C_4$ to $C_{12}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Typical alkyl-alkoxy magnesium compounds are ethyl magnesium butoxide, magnesium dibutoxide, butyl magnesium pentoxide, magnesium dipentoxide, octyl magnesium butoxide and octyl magnesium octoxide. Most preferably, one R is a butyl group and the other R of $R_2Mg$ is an octyl group, i.e. the dialkyl magnesium compound is butyl octyl magnesium.

The alcohol used in the reaction with the magnesium compound precursor as stated in the previous paragraph is a monohydric alcohol, typically $C_1$ to $C_{20}$ monohydric alcohols, a polyhydric (by definition including dihydric and higher alcohols) alcohol or a mixture of at least one monohydric alcohol and at least one polyhydric alcohol. Magnesium enriched complexes can be obtained by replacing a part of the monohydric alcohol with the polyhydric alcohol. In one embodiment it is preferred to use one monohydric alcohol only.

Preferable monohydric alcohols are those of formula R'OH in which R' is a $C_2$ to $C_{16}$ alkyl group, most preferably a $C_4$ to $C_{12}$ alkyl group, like 2-ethyl-1-hexanol.

Typical polyhydric alcohols are ethylene glycol, propene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, glycerol, trimethylol propane and pentaerythritol. Most preferably the polyhydric alcohol is selected from the group consisting of ethylene glycol, 2-butyl-2-ethyl-1,3-propanediol and glycerol.

The reaction conditions used to obtain the metal compound (CM) which is selected from one of the groups 1 to 3 of the periodic table (IUPAC), preferably the metal compound (CM) of Group 2, even more preferred the magnesium compound, may vary according to the used reactants and agents. However, according to one preferred embodiment of the present invention, said magnesium compound precursor is reacted with said at least one alcohol at temperatures of 30 to 80 °C for 10 to 90 min, preferably about 30 min.

After having obtained the metal compound (CM) which is selected from one of the groups 1 to 3 of the periodic table (IUPAC), preferably the metal compound of Group 2, even more preferred the magnesium compound, said compound (CM) is further reacted with an internal electron donor (ID) or electron donor precursor (P-ID). The internal electron donor (ID) is preferably a mono- or diester of a carboxylic acid or diacid, the latter being able to form a chelate-like structured complex, preferably a mono- or diester of an aromatic carboxylic acid or diacid. Said carboxylic acid ester or diester, preferably the mono- or diester of the aromatic carboxylic acid or diacid, can be formed in situ by reaction of an carboxylic acid halide or diacid halide, i.e. a preferred internal electron donor precursor (P-ID), with a $C_2$-$C_{16}$ alkanol and/or diol. Preferably said metal compound (CM) reacts with an internal electron donor precursor (P-ID), i.e. with a dicarboxylic acid dihalide having preferably the formula (I)

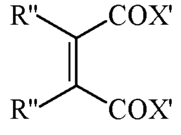

wherein

each R" is an identical or different $C_1$ to $C_{20}$ hydrocarbyl group or both R"s form together with the two unsaturated carbons seen in the formula (I) a $C_5$ to $C_{20}$ aliphatic or aromatic ring, and
X' is a halogen
to give the complex (C).

Among non-aromatic dicarboxylic acid dihalides, the group consisting of maleic acid dihalide, fumaric acid dihalide and their R" substituted derivatives such as citraconic acid dihalide and mesaconic acid dihalide, respectively, are the most important.

Among the cyclic, preferably aromatic, dicarboxylic acid dihalides, the group consisting of phthalic acid dihalide (1,2-benzene dicarboxylic acid dihalide), its hydrogenate 1,2-cyclohexane dicarboxylic acid dihalide, and their derivatives, is the most important. Most preferably, said dicarboxylic acid dihalide is phthaloyl dichloride.

Preferably the magnesium compound is reacted with the dicarboxylic acid halide in a molar ratio $Mg_{total\ added}$/dicarboxylic acid halide of 1 : 1 to 1 : 0.1, preferably between 1 : 0.6 and 1 : 0.25.

Preferably the metal compound (CM) which is selected from one of the groups 1 to 3 of the periodic table (IUPAC), more preferably the metal compound of Group 2, even more preferably the magnesium compound, is reacted with the internal electron donor (ID) or with the internal electron donor precursor (P-ID), i.e. the dicarboxylic acid dihalide, under at least one of the following conditions:

- adding said dicarboxylic acid dihalide under room temperature and
- heating the obtained reaction mixture to a temperature of 20 to 80 °C, preferably of 50 to 70 °C
- keeping the temperature for 10 to 90 min, preferably for 25 to 35 min.

The organic solvent used for the preparation of the complex (C) can be any organic solvent as long as it is ensured that the complex (C) is dissolved at ambient temperatures, i.e. at temperatures up to 80 °C (20 to 80 °C). Accordingly it is appreciated that the organic solvent comprises, preferably consists of, $C_5$ to $C_{10}$ hydrocarbon, more preferably of a $C_6$ to $C_{10}$ aromatic hydrocarbon, like toluene.

Suitable transition metal compounds (CT) are in particular transition metal compounds (CT) of transition metals of groups 4 to 6, in particular of group 4 or 5, of the periodic table (IUPAC). Suitable examples include Ti and V, in particular preferred is a compound of Ti, like $TiCl_4$.

In addition to the compounds described above, the solid catalyst system (SCS) can comprise e.g. reducing agents, like compounds of group 13, preferably Al-compounds containing alkyl and/or alkoxy residues, and optionally halogen residues. These compounds can be added into the solid catalyst system (SCS) preparation at any step before the final recovery.

The solid catalyst system (SCS) preferably used in the present invention may comprise in addition to the catalyst components conventional cocatalyst, e.g. those based on compounds of group 13 of the periodic table (IUPAC), e.g. organo aluminum, such as aluminum compounds, like aluminum alkyl, aluminum halide or aluminum alkyl halide compounds (e.g. triethylaluminum) compounds, can be mentioned.

Additionally one or more external donors can be used which may be typically selected e.g. from silanes or any other well known external donors in the field. External donors are known in the art and are used as stereoregulating agent in propylene polymerization. The external donors are preferably selected from diethylamino-triethoxy-silane (U-Donor), hydrocarbyloxy silane compounds and hydrocarbyloxy alkane compounds.

Typical hydrocarbyloxy silane compounds have the formula (II)

$$R'_0Si(OR")_{4-0} \qquad (II)$$

wherein

R' is an a- or b-branched $C_3$ to $C_{12}$-hydrocarbyl,
R" a $C_1$ to $C_{12}$-hydrocarbyl, and
0 is an integer 1 to 3.

More specific examples of the hydrocarbyloxy silane compounds which are useful as external electron donors in the invention are diphenyldimethoxy silane, dicyclopentyldimethoxy silane (D-Donor), dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane (C-Donor), cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the organo silane compounds are diethylamino-triethoxy-silane (U-Donor), cyclohexylmethyl dimethoxy silane (C-Donor), or dicyclopentyl dimethoxy silane (D-Donor), the latter especially preferred.

After contacting the solution of the complex (C) with the liquid of the transition metal compound (CT) or the solution of the transition metal compound (CT) either the solid catalyst system (SCS) spontaneous precipitates or alternatively an emulsion is formed, the latter being preferred. Whether an emulsion is obtained or an immediate precipitation occurs depend on the specific conditions chosen. Reference is made inter alia to the International patent applications WO 03/000754, WO 03/000757, and WO 2007/077027 as well as to the European patent application EP 2 251 361. In the following the emulsion method is described in more detail.

The solid catalyst system according to the emulsion method is obtained by

(a) preparing a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof in an organic solvent,
(b) mixing said solution of complex (C) with a liquid transition metal compound (CT),
(c) obtaining thereby an emulsion of a continuous phase and an dispersed phase, said dispersed phase is in form of droplets and comprises the complex (C) and the transition metal compound (CT),
(d) solidifying the droplets of the dispersed phase obtaining thereby the solid catalyst system (SCS).

Accordingly, for the emulsion method the complex (C) is preferably dissolved in an $C_6$ to $C_{10}$ aromatic hydrocarbon, like toluene and contacted with a liquid transition metal compound (CT), preferably with a liquid transition metal compound (CT) of transition metals of groups 4 to 6, in particular of group 4, of the periodic table (IUPAC), like Ti (e.g. $TiCl_4$). Due to the contact of the solution of the complex (C) with the liquid transition metal compound (CT) an emulsion is formed. The production of a two-phase, i.e. of an emulsion, is encouraged by carrying out the contacting at low temperature, specifically above 10 °C but below 60 °C, preferably between above 20 °C and below 50 °C. The emulsion comprises a continuous phase and a dispersed phase in form of droplets. In the dispersed phase the complex (C) as well as the transition metal compound (CT) are present.

Additional catalyst components, like an aluminium compound, like aluminium alkyl, aluminium alkyl halide or aluminium alkoxy or aluminium alkoxy alkyl or halide or other compounds acting as reducing agents can be added to the reaction mixture at any step before the final recovery of the solid catalyst system. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing the obtained emulsion include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the solid catalyst system (SCS) particles.

Said solid catalyst system (SCS) particles may then be formed and recovered in usual manner, including the solidification of the catalyst particles by heating (for instance at a temperature of 70 to 150 °C, more preferably at 90 to 110 °C) and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The solid catalyst particles (SCS) obtained may furthermore be subjected to further post-processing steps, such as washing, stabilizing, pre-polymerization, prior to the final use in polymerisation process.

In a preferable embodiment of the preparation of the catalyst, the solid catalyst component is prepared by a process comprising: preparing a solution of magnesium complex by reacting an alkoxy magnesium compound and an electron donor or precursor thereof in a $C_6$-$C_{10}$ aromatic liquid reaction medium; reacting said magnesium complex with a compound of at least one four-valent Group 4 metal at a temperature greater than 10 °C and less than 60 °C to produce an emulsion of a denser, $TiCl_4$/toluene-insoluble, oil dispersed phase having, Group 4 metal/Mg mol ratio 0.1 to 10 in an oil disperse phase having Group 4 metal/Mg mol ratio 10 to 100; agitating the emulsion, optionally in the presence of an emulsion stabilizer and/or a turbulence minimizing agent, in order to maintain the droplets of said dispersed phase within an average size range of 5 to 200 μm. The catalyst particles are obtained after solidifying said particles of the dispersed phase by heating. In said process an aluminium alkyl compound of the formula $AlR_{3-n}X_n$, where R is an alkyl and/or an alkoxy group of 1 to 20, preferably of 1 to 10 carbon atoms, X is a halogen and n is 0, 1, 2 or 3, is added and brought into contact with the droplets of the dispersed phase of the agitated emulsion or during the washing step of the solidified particles before recovering the final solid particles. The aluminium alkyl compound is preferably trialkyl aluminium such as trimethylaluminium, triethylaluminium, triisobutylaluminium or tri-n-octylaluminium. However, it may also be an alkylaluminium halide, such as diethylaluminium chloride, dimethylaluminium chloride and ethylaluminium sesquichloride.

Typical examples used as external donors are dicyclopentyldimethoxysilane (DCPDMS), cyclohexylmethyl-dimethoxysilane (CHMDMS) and dicyclopentadienyldiethoxysilane (DCPDES).

The polyolefin composition according to the present invention may further comprise additives.

The polyolefin composition may contain additives known in the art, like antioxidants, acid scavengers, nucleating agents, antiblocking agents, and antistatic agents. Typically the total amount of additives is not more than 5.0 wt%, yet more preferably not more than 3.0 wt%, like not more than 2.0 wt%.

In one embodiment of the invention, the polyolefin composition comprises 0.1 to 5.0 wt% of one or more additives selected from the group of an antiblocking agent (AB), an antioxidant, an acid scavenger, a nucleating agent, and an antistatic agent. Preferred additives are antiblocking agents, antioxidants, and/or acid scavengers.

A further embodiment prefers antiblocking agents, antioxidants and/or acid scavengers, but is free of slip agents.

It is to be understood that the addition of an additive is common in the art. Hence, it is to be regarded as disclosed and known to the skilled person that any of the herein mentioned additives, in the amounts mentioned herein, may be singularly or in combination with others added to the polyolefin composition according to the present invention.

Antioxidants are commonly used in the art, examples are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693-36-7, sold as Irganox PS-802 FL™ by BASF), nitrogen-based antioxidants (such as 4,4'-bis(1,1'-dimethylbenzyl)diphenylamine), or antioxidant blends.

Acid scavengers are also commonly known in the art. Examples are calcium stearates, sodium stearates, zinc stearates, magnesium and zinc oxides, synthetic hydrotalcite (e.g. SHT, CAS-no. 11097-59-9), lactates and lactylates, as well as calcium and zinc stearates.

Common antiblocking agents are natural silica such as diatomaceous earth (such as CAS-no. 60676-86-0 (SuperfFloss™), CAS-no. 60676-86-0 (SuperFloss E™), or CAS-no. 60676-86-0 (Celite 499™)), synthetic silica (such as CAS-no. 7631-86-9, CAS-no. 7631-86-9, CAS-no. 7631-86-9, CAS-no. 7631-86-9, CAS-no. 7631-86-9, CAS-no. 7631-86-9, CAS-no. 112926-00-8, CAS-no. 7631-86-9, or CAS-no. 7631-86-9), silicates (such as aluminum silicate (Kaolin) CAS-no. 1318-74-7, sodium aluminum silicate CAS-no. 1344-00-9, calcined kaolin CAS-no. 92704-41-1, aluminum silicate CAS-no. 1327-36-2, or calcium silicate CAS-no. 1344-95-2), synthetic zeolites (such as sodium calcium aluminosilicate hydrate CAS-no. 1344-01-0, CAS-no. 1344-01-0, or sodium calcium aluminosilicate, hydrate CAS-no. 1344-01-0).

Especially preferred is that the antiblocking agent (AB) is a silicon dioxide and/or silicate. Preferably the antiblocking agent (AB) is a silicon dioxide ($SiO_2$), like a synthetic silicon dioxide. Typically the silicon dioxide has pore volume in the range of 0.8 to 1.2 ml/g and/or a particle size of 3.5 to 6.0 μm.

Nucleating agents are also known in the art. They may be selected from the group of benzoates, such as sodium or lithium benzoate, sorbitol compounds, such as 2,4 di(methylbenzylidene) sorbitol, phosphorous-based compounds such as sodium di(4-tert. butylphenol) phosphate, but also beta-nucleators such as N, N'-dicyclohexyl-2,6-naphtalene dicarboxyamide, rosins such as calcium resinate, and others such as talc.

Antistatic agents are known in the art as well. They may be selected from the group of glyceryl esters such as CAS-no. 97593-29-8, CAS-no. 97593-29-8, or CAS-no. 97593-29-8, ethoxylated amines such as Hostastat FA 18™ from Clariant, ethoxylated amides such as N,N-bis (2-hydroxyethyl) dodecanamide, permanent antistats such as Irgastat™ grades from BASF, or sorbitan based products such as sorbitan monooleate.

The present invention is in a further aspect directed to the use of the polyolefin composition according to the present invention as defined above for the preparation of non-oriented or oriented films, preferably of non-oriented films, more preferably cast films.

Further on, the present invention is in a still further aspect directed to a film, i.e. a non-oriented or oriented film, preferably a non-oriented film, more preferably a cast film, comprising a polyolefin composition according to the present invention as defined above.

Preferably, the film according to the present invention comprises at least 80 wt%, more preferably comprises at least 95 wt%, still more preferably consists, of the polyolefin composition according to the present invention as described above.

A non-oriented film is often referred to also as unoriented film.

One distinguishes between unoriented and oriented films (see for instance polypropylene handbook, Nello Pasquini, 2nd edition, Hanser). Oriented films are typically monoaxially or biaxially oriented films, whereas unoriented films are cast, blown or tubular films. Accordingly, an unoriented film is not drawn on purpose (intentionally) in solid or close to solid state in machine and/or transverse direction as done by oriented films, i.e. unoriented film means herein that the film is not intended to be oriented. Thus the unoriented film is not a monoaxially or biaxially oriented film as evident for a skilled person.

Non-oriented films cover cast films, tubular quench films, and blown films. Cast films are particularly preferred.

Oriented films according to the present invention are preferably biaxially oriented films comprising a polyolefin composition according to the present invention, e.g. biaxially oriented polypropylene (BOPP) films.

The film, i.e. the non-oriented film or the oriented film, preferably the cast film, of the present invention can be a monolayer or a multilayer film.

The thickness of the film is not critical but will be usually 20-200 μm.

A monolayer film of the present invention comprises at least 80 wt%, preferably at least 95 wt%, preferably consists, of the polyolefin composition of the present invention.

The thickness of a monolayer film of the present invention is typically between 20-200 μm, suitably 20-100 μm.

A multilayer film of the present invention comprises at least one layer comprising the polyolefin composition of the present invention as defined above. Said layer(s) of the multilayer film comprising the polyolefin composition according to the present invention as described above can be any layer(s), e.g. core or outer layer(s).

According to a particular preferred embodiment, a multilayer film of the present invention comprises at least one layer comprising the polyolefin composition of the present invention as defined above as outer layer, more preferably as sealing layer, and at least one, preferably two, further film layers.

The multilayer film according to this particularly preferred embodiment of the present invention can be a cast film or a BOPP film, preferably a cast film.

More preferably in this regard is that a multilayer cast film or BOPP film of the present invention, preferably a cast film, is a film comprising, even more preferably consisting of, at least three layers, wherein one outer layer is a sealing layer comprising, even more preferably consisting of, the polyolefin composition of the present invention as defined above, and wherein the multilayer film comprises also a core layer, preferably comprising a propylene homopolymer, and wherein the multilayer film comprises also a second outer layer which is a non-sealable skin layer, preferably comprising a propylene random copolymer. Most preferably in this embodiment, the multilayer film is a cast film of at least three layers, preferably consisting of three layers as defined above.

In this regard in one further embodiment the multilayer cast film or BOPP film of the present invention, preferably a cast film, is a film comprising, even more preferably consisting of, more than three layers, preferably at least five layers, wherein one outer layer is a sealing layer comprising, even more preferably consisting of, the polyolefin composition of the present invention as defined above, and wherein the multilayer film comprises also a core layer, preferably comprising a propylene homopolymer, and wherein the multilayer film comprises also a second outer layer which is a non-sealable skin layer, preferably comprising a propylene random copolymer, and wherein the multilayer film also comprises two so-called subskin layers one of which is between the core layer and the non-sealable skin layer mentioned above, the other is between the core layer and the sealing layer mentioned above. Most preferably in this embodiment, the multilayer film is a cast film of at least five layers, preferably of five layers as defined above.

The thickness of a layer of a multilayer film, the respective layer comprising the polyolefin composition according to the present invention as described above, can vary between 1-200 μm, suitably 1-190 μm, depending on the function of the layer, i.e. whether the layer functions e.g. as outer layer (skin layer) or as core layer, and is selected accordingly, as well known for a skilled person. For instance, outer layer can have a thickness of 2-8 μm, and the thickness of core layer can e.g. be 14-200 μm, such as 16-100 μm.

The at least one layer of the multilayer film of the present invention comprises at least 80 wt%, preferably at least 95 wt%, preferably consists, of the polyolefin composition of the present invention.

The film, preferably the non-oriented film, more preferably the cast film, of the present invention is preferably transparent.

The film, preferably the non-oriented film, more preferably the cast film, of the present invention has preferably excellent optical properties expressed e.g. in terms of one, more or all, preferably all, of reduced haze, increased gloss and increased transparency (quantity of light to go through the film).

The non-oriented film, preferably the cast film, according to the present invention may be conventionally prepared by extruding the polyolefin composition of the present invention, i.e. a pre-obtained melt-mix thereof, through a die with dimensions as desired for the end film application, as well known in the art.

Immediately after exiting the die at the extrusion step the molten film enters a cooling step where its temperature is lowered to solidify the film.

In a preferred embodiment, the non-oriented film, like the cast film, is obtained by a process comprising the steps of

(a) providing components for producing the film including components (A) and (B),
(b) blending the components before or during melt-mixing in an extruder for producing a film,
(c) extruding the film by means of the extruder,
(d) cooling the obtained film, and
(e) recovering of the obtained film.

In the extrusion step (c), the melt-mix of the polyolefin composition is extruded through a die with dimensions as desired for the end film application, as well known in the art.

Immediately after exiting the die at the extrusion step (c) the molten film enters the cooling step (d) where its temperature is lowered to solidify the film. In case of a cast film the cooling step (d) of the extruded film is effected by a chill roll having a suitable temperature.

The cast film process is well known by the skilled person and well described in the literature.

According to an alternative but still preferred embodiment of the present invention, the non-oriented film is a blown film and the cooling step (d) of the extruded film is effected by air.

According to an alternative but still preferred embodiment of the present invention, the non-oriented film is a tubular quench film and the cooling step (d) of the extruded film is effected by water.

The processes for producing blown films with air cooling and for producing tubular quench films with water cooling are known by the skilled person and well described in the literature.

The present invention is in a further aspect directed to the use of a polymer of 1-butene in an amount of 7.0 to 12 wt% based on the weight of the polyolefin composition in a polyolefin composition comprising 88 to 93 wt% based on the weight of the polyolefin composition of a random copolymer of propylene, wherein the comonomer in the random copolymer of propylene is ethylene and there is only one comonomer (R-PP), for reducing the sealing initiation temperature of an oriented or non-oriented film, preferably a cast film, comprising the polyolefin composition by at least 5.0 °C, preferably by at least 8.0 °C, if compared to another film which differs only insofar that the polyolefin composition does not contain a polymer of 1-butene, wherein

(A) the random copolymer of propylene (R-PP) has

- a comonomer content of 1.0 to 10 wt% based on the weight of the random copolymer of propylene, and
- a xylene cold soluble content of below 10 wt%,

and
(B) the polymer of 1-butene has

- a weight average molecular weight $M_w$ of 100,000 to 300,000 g/mol, and
- a molecular weight distribution $M_w/M_n$ of below 6.0.

As regards further preferred embodiments of this aspect of use of a polymer of 1-butene of the present invention it is referred to the description of the preferred embodiments of the polyolefin composition according to the present invention and of the films according to the present invention as described above.

In the following the present invention is further illustrated by means of examples.

## EXAMPLES

### 1. Definitions/Measuring Methods

The following definitions of terms and determination methods apply for the above general description of the invention as well as to the below examples unless otherwise defined.

**Calculation** of comonomer content of the second propylene ethylene random copolymer fraction (R-PP2):

$$\frac{C(R2) - w(PP1) x\, C(PP1)}{w(PP2)} = C(PP2)$$

wherein

w(PP 1) is the weight fraction of the propylene ethylene random copolymer fraction (R-PP1), i.e. the product of the first reactor (R1), based on the weight of R-PP;

w(PP2) is the weight fraction of the propylene ethylene random copolymer fraction (R-PP2), i.e. of the polymer produced in the second reactor (R2), based on the weight of R-PP

C(PP1) is the comonomer content [in wt%] of the propylene ethylene random copolymer fraction (R-PP1), i.e. of the product of the first reactor (R1),

C(R2) is the comonomer content [in wt%] of the product obtained in the second reactor (R2), i.e. the propylene ethylene random copolymer (R-PP),

C(PP2) is the calculated comonomer content [in wt%] of the the propylene ethylene random copolymer fraction (R-PP2).

**Calculation** of the xylene cold soluble (XCS) content of the propylene ethylene random copolymer fraction (R-PP2):

$$\frac{XS(R2) - w(PP1)x\,XS(PP1)}{w(PP2)} = XS(PP2)$$

wherein

| | |
|---|---|
| w(PP 1) | is the weight fraction of the propylene ethylene random copolymer fraction (R-PP1), i.e. the product of the first reactor (R1), |
| w(PP2) | is the weight fraction of the propylene ethylene random copolymer fraction (R-PP2), i.e. of the polymer produced in the second reactor (R2), |
| XS(PP1) | is the xylene cold soluble (XCS) content [in wt%] of the propylene ethylene random copolymer fraction (R-PP1), i.e. of the product of the first reactor (R1), |
| XS(R2) | is the xylene cold soluble (XCS) content [in wt%] of the product obtained in the second reactor (R2), i.e. the propylene ethylene random copolymer (R-PP), |
| XS(PP2) | is the calculated xylene cold soluble (XCS) content [in wt%] of the propylene ethylene random copolymer fraction (R-PP2). |

**Calculation** of melt flow rate $MFR_2$ (230 °C) of the propylene ethylene random copolymer fraction (R-PP2):

$$MFR(PP2) = 10^{\left[\frac{\log(MFR(PP)) - w(PP1)\,x\,\log(MFR(PP1))}{w(PP2)}\right]}$$

wherein

| | |
|---|---|
| w(PP 1) | is the weight fraction of the propylene ethylene random copolymer fraction (R-PP1), i.e. the product of the first reactor (R1), |
| w(PP2) | is the weight fraction of the propylene ethylene random copolymer fraction (R-PP2), i.e. of the polymer produced in the second reactor (R2), |
| MFR(PP1) | is the melt flow rate $MFR_2$ (230 °C) [in g/10min] of the propylene ethylene random copolymer fraction (R-PP1), |
| MFR(PP) | is the melt flow rate $MFR_2$ (230 °C) [in g/10min] of the product obtained in the second reactor (R2), i.e. the propylene ethylene random copolymer (R-PP), |
| MFR(PP2) | is the calculated melt flow rate $MFR_2$ (230 °C) [in g/10min] of the propylene ethylene random copolymer fraction (R-PP2). |

**Density** is measured according to ISO 1183-1 - method A (2004). Sample preparation is done by compression moulding in accordance with ISO 1872-2:2007.

**$MFR_2$** is measured according to ISO 1133 (2.16 kg load), at 230 °C for random copolymer of propylene, at 190 °C for polymer of 1-butene.

**Ethylene content/Comonomer content** is measured with Fourier transform infrared spectroscopy (FTIR) calibrated with $^{13}C$-NMR. When measuring the ethylene content in polypropylene, a thin film of the sample (thickness about 0.3 mm) was prepared by hot-pressing. The area of absorption peaks 720 and 733 $cm^{-1}$ was measured with Bruker Tensor 27 FTIR spectrometer. The method was calibrated by ethylene content data measured by $^{13}C$-NMR. The presence or absence of a comonomer, e.g. ethylene, in a polymer of 1-butene was identified from the presence or absence of additional absorption in FTIR, for ethylene at 730 $cm^{-1}$.

**The xylene cold solubles (XCS, wt%):** Content of xylene cold solubles (XCS) is determined at 25 °C according ISO 16152; first edition; 2005-07-01

**Melting temperature $T_m$, crystallization temperature $T_c$:** measured with Mettler TA820 differential scanning calorimetry (DSC) on 5 to 10 mg samples. DSC is run according to ISO 11357 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

**The glass transition temperature $T_g$** is determined by dynamic mechanical analysis according to ISO 6721-7. The measurements are done in torsion mode on compression moulded samples (40x10x1 $mm^3$) between -100 °C and

+150 °C with a heating rate of 2 °C/min and a frequency of 1 Hz.
Tensile test for film: ASTM D882

**Flexural modulus test for base resin or pellet thereof:**

ISO 178. The test specimens have a dimension of 80 × 10 × 4.0 $mm^3$ (length × width × thickness), and were prepared by injection molding according to EN ISO 1873-2.

The length of the span between the supports was 64 mm, the test speed was 2 mm/min and the force was 100 N.

Number average molecular weight ($M_n$), **weight average molecular weight** ($M_w$) and polydispersity ($M_w/M_n$) are determined by Gel Permeation Chromatography (GPC) according to the following method:
The weight average molecular weight Mw and the polydispersity ($M_w/M_n$, wherein $M_n$ is the number average molecular weight and $M_w$ is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5-10 mg of polymer in 10 mL (at 160 °C) of stabilized TCB (same as mobile phase) and keeping for 3 hours with continuous shaking prior sampling in into the GPC instrument.

**Film thickness** was measured according to ISO 4593.

**Transparency, haze and clarity:** All optical parameters are measured on 30 μm thick cast films. Transparency, haze and clarity were determined according to ASTM D 1003.

**Gloss** is measured on 30 μm thick cast film according to DIN 67530/ISO 2813 at an angle of 60°.

**Sealing initiation temperature (SIT)** is the sealing temperature at which a heat seal of significant strength is produced, here a seal force of 5 N, measured on Otto Brugger in line with ASTM F 2029 and ASTM F 88 in following conditions: Seal width 25 mm, seal pressure 3 bars, 1 second dwell time, 2 heated flat jaws, seal force 5 N, peel speed 100 mm/s, test speed 250 mm/min.

**Hot tack** is measured on DTC in line with ASTM F 1921 in the following conditions: 3 bars, sealing time 1 second, cooling time 0.1 second (release), 2 teflonized jaws, hot tack force 1 N, peel speed 200 mm/s, sealing pressure 0.25 $N/mm^2$, dwell/sealing time 1 second, delay time 100 ms; test/peel speed 200 mm/s; flat jaws covered with teflon tape.

**2. Examples**

a) Preparation of a propylene ethylene random copolymer (R-PP) according to the present invention:

The catalyst used in the polymerization processes of the examples is the catalyst as prepared in Example 8 of WO 2004/029112 A1 (see pages 22-23), except that diethylaluminum chloride is used as an aluminum compound instead of triethylaluminum.

An external donor, dicyclopentyldimethoxy silane, is used. The ratio of aluminum to donor is 7.5. Polypropylene is copolymerized with ethylene in a pilot bimodal multireactor system for polymerization mode consisting of a pre-polymerization, a loop reactor and a gas reactor, with a catalyst of the above-described system and under the polymerization conditions as indicated in Table 1. The technical features of the obtained random copolymer of propylene and ethylene are listed in Table 2.

In Table 1, "$H_2/C_3$ / mol/kmol" means the feed ratio of $H_2/C_3$, and "$C_2/C_3$ / mol/kmol"means the feed ratio of $C_2/C_3$. The volume of the pre-polymerization reactor is very small, and production rate is much less than that in loop reactor and gas reactor. In this case, R-PP1 means the sum of copolymers as produced in pre-polymerization reactor and loop reactor, and R-PP2 means the fraction as produced in gas reactor.

The technical features of the final copolymer product and two fractions (R-PP1 & R-PP2) as produced in different reactors are listed in Table 2. The "$C_2$-content","XS"and "$MFR_2$" of the 45% fraction (R-PP1) of the final copolymer and the respective technical features of the final copolymer are obtained by directly testing the products of the loop reactor and the gas reactor (i.e. the last reactor), repsectively. The"$C_2$-content", "XS"and "$MFR_2$" of the 55% fraction (R-PP2) are obtained by calculation according to the calculation equations as indicated under Definitions/Measuring Methods above.

Table 1: Polymerization conditions of propylene ethylene random copolymer (R-PP)

| | | |
|---|---|---|
| | Total production / kg/h | 60 |
| **Prepolymerization** | Temperature / °C | 30 |
| | Pressure / bar | 55 |
| | Donor / g/t | 40 |
| | $H_2$ feed / g/h | 2.5 |
| | $C_2$ feed / g/h | 300 |
| **Loop Reactor** | Temperature / °C | 70 |
| | Production / kg/h | 25 |
| | Pressure / bar | 55 |
| | $C_2$-content / wt% | 3.4 |
| | $C_2/C_3$ ratio / mol/kmol | 8.55 |
| | $C_2$ feed / g/h | 600 |
| | $H_2/C_3$ in Loop / mol/kmol | 4 |
| | $MFR_2$ at 230 °C | 8 |
| | Split / % | 45 |
| **Gas Phase Reactor** | $C_2/C_3$ / mol/kmol | 28 |
| | $C_2$-content / wt% | 4.2 |
| | $H_2/C_3$ / mol/kmol | 42 |
| | $MFR_2$ at 230 °C | 8 |
| | Temperature / °C | 85 |
| | Pressure / bar | 21 |
| | Split / % | 55 |

Table 2: Technical features of the final propylene ethylene random copolymer (R-PP) and two fractions as produced in different reactors

| | | 45% fraction (prepolymerization and loop reactor) | 55% fraction (gas phase reactor) | Final product (R-PP) |
|---|---|---|---|---|
| $C_2$ | / wt% | 3.4 | 4.9 | 4.2 |
| $MFR_2$ | / g/10 min | 8.0 | 8.0 | 8.0 |
| XCS | wt% | 5.0 | 8.6 | 7.0 |
| $T_m$ | /°C | | | 137 |
| $T_m$ | / °C | | | 146 |

b) Preparation of polyolefin compositions

After polymerization, the copolymer is pelletized in an extruder. The formulation contains regular additives such as a normal acid scavenger (e.g. Ca stearate), antioxidants (e.g. Irganox 1010, Irgafos 168), anti-slip agent and anti-blocking agents (e.g. synthetic silica) in conventionally used amounts.

In the inventive example, Example 2, at this step also 10 wt% of Tafmer BL2491M is added to the polyolefin composition.

Tafmer BL2491M is a polymer of 1-butene having a weight average molecular weight of 197,000 g/mol as determined by GPC and a molecular weight distribution $M_w/M_n$ of 2.7. Tafmer BL2491M is commercially available from Mitsui.

In the reference example, Example 1, no polymer of 1-butene is added.

c) Preparation of cast films

The compositions of Examples 1 and 2, respectively, are extruded in a cast machine to obtain a 30 $\mu$m 3-layer film with the following setup.

Core layer: HD601CF, a propylene homopolymer having an $MFR_2$ (230 °C) of 8.0 g/10 min and a melting temperature $T_m$ of 164 °C. It is commercially available from BorougeBorealis.
Non-sealable skin layer: RD265CF, a propylene random copolymer having an $MFR_2$ (230 °C) of 8.0 g/10 min and a melting temperature $T_m$ of 151 °C. It is commercially available from Borouge/Borealis.
Sealable skin layer: polyolefin composition as described above for Examples 1 ($MFR_2$, 230 °C, 2.16 kg of 8.0 g/10 min) and 2 ($MFR_2$, 230 °C, 2.16 kg of 8.1 g/10 min) COLLIN cast configuration for 30 μm 3-layer film (6-18-6 μm)
Sealable skin layer on the chill roll side
No corona treatment

Table 3 shows the properties of the respective cast films of Examples 1 and 2.

Table 3:

| | Example 1 | Example 2 |
|---|---|---|
| SIT / °C | 112 | 104 |
| Hot tack / °C | 94 | 73 |
| Haze / % | 3.0 | 2.6 |
| Gloss at 60° | 137.0 | 136.7 |

As can be seen from the values of Example 2, the sealing initiation temperature (SIT) is very much reduced by 8 °C with addition of only 10 wt% of the polymer of 1-butene of the invention. This strong improvement enables to provide a highly feasible alternative to higher speed packaging lines which are demanding with respect of the choice of the polymer material. In addition, hot tack is improved as well and optical properties like haze and gloss are comparable to the reference, i.e. still very good. Haze is even slightly improved.

## Claims

1. A polyolefin composition comprising

   (A) 88 to 93 wt% based on the weight of the polyolefin composition of a random copolymer of propylene, wherein the comonomer in the random copolymer of propylene is ethylene and there is only one comonomer, having

   - a comonomer content of 1.0 to 10 wt% based on the weight of the random copolymer of propylene, and
   - a xylene cold soluble content of below 10 wt%,

   and
   (B) 7.0 to 12 wt% based on the weight of the polyolefin composition of a polymer of 1-butene having

   - a weight average molecular weight $M_w$ of 100,000 to 300,000 g/mol,
   - a molecular weight distribution $M_w/M_n$ of below 6.0.

2. The polyolefin composition according to claim 1, wherein the random copolymer of propylene has a comonomer content of 2.0 to 10 wt%, preferably from 3.0 wt% to 8.3 wt%, further preferred from 3.5 wt% to 8.0 wt%, even further preferred from 4.0 wt% to 6.0 wt%, based on the weight of the random copolymer of propylene.

3. The polyolefin composition according to claim 1 or 2, wherein the random copolymer of propylene has a melt flow rate $MFR_2$ of 1.0 to 50 g/10 min, preferably of 5.0 to 15 g/10 min, as measured at 230 °C (2.16 kg) according to ISO 1133.

4. The polyolefin composition according to anyone of claims 1 to 3, wherein the random copolymer of propylene exhibits two melting temperatures $T_m$ which differ from each other as determined by differential scanning calorimetry according to ISO 11357-3.

5. The polyolefin composition according to claim 4, wherein the two melting temperatures $T_m$ of the random copolymer of propylene differ from each other by at least 4.0 °C.

6. The polyolefin composition according to anyone of claims 1 to 5, wherein the polymer of 1-butene has a melt flow rate $MFR_2$ of between 2.0 g/10 min and 10g/10 min, preferably between 2.5 g/10 min and 8.0 g/10 min, further preferred between 3.0 and 6.0 g/10 min as measured at 190 °C (2.16 kg) according to ISO 1133.

7. The polyolefin composition according to anyone of claims 1 to 8, wherein the polymer of 1-butene has a weight average molecular weight $M_w$ of 150,000 to 250,000 g/mol.

8. The polyolefin composition according to anyone of claims 1 to 7, wherein the polymer of 1-butene has a molecular weight distribution $M_w/M_n$ of below 4.5.

9. A film, preferably a non-oriented film or a biaxially oriented film, still more preferably a cast film, comprising a polyolefin composition according to anyone of claims 1 to 8.

10. A multilayered film comprising a film according to claim 9 as a sealing layer and at least one, preferably two, further film layers.

11. Use of a polymer of 1-butene in an amount of 7.0 to 12 wt% based on the weight of the polyolefin composition in a polyolefin composition comprising 88 to 93 wt% based on the weight of the polyolefin composition of a random copolymer of propylene, wherein the comonomer in the random copolymer of propylene is ethylene and there is only one comonomer, for reducing the sealing initiation temperature of an oriented or non-oriented film comprising the polyolefin composition by at least 5 °C, preferably by at least 8 °C, if compared to another film which differs only insofar that the polyolefin composition does not contain a polymer of 1-butene, wherein

(A) the random copolymer of propylene has

- a comonomer content of 1.0 to 10 wt% based on the weight of the random copolymer of propylene, and
- a xylene cold soluble content of below 10 wt%,

and
(B) the polymer of 1-butene has

- a weight average molecular weight $M_w$ of 100,000 to 300,000 g/mol,
- a molecular weight distribution $M_w/M_n$ of below 6.0.

## Patentansprüche

1. Eine Polyolefin-Zusammensetzung, umfassend

(A) 88 bis 93 Gew.-%, bezogen auf das Gewicht der Polyolefin-Zusammensetzung, eines statistischen Co-Polymers von Propylen, wobei das Co-Monomer in dem statistischen Co-Polymer von Propylen Ethylen ist und es nur ein Co-Monomer gibt, mit

- einen Co-Monomer-Gehalt von 1,0 bis 10 Gew.-%, bezogen auf das Gewicht des statistischen Co-Polymers von Propylen, und
- einen Gehalt von in kaltem Xylol löslichen Stoffen von weniger als 10 Gew.-%,

und
(B) 7,0 bis 12 Gew.-%, bezogen auf das Gewicht der Polyolefin-Zusammensetzung, eines Polymers von 1-Buten mit

- einem Massenmittel des Molekulargewichts $M_w$ von 100.000 bis 300.000 g/mol,
- einer Molekulargewichtsverteilung $M_w/M_n$ von unter 6,0.

2. Die Polyolefin-Zusammensetzung nach Anspruch 1, wobei das statistische Co-Polymer von Propylen einen Co-Monomer-Gehalt von 2,0 bis 10 Gew.- %, vorzugsweise von 3,0 Gew.-% bis 8,3 Gew.-%, weiter bevorzugt von 3,5 Gew.-% bis 8,0 Gew.-%, noch weiter bevorzugt von 4,0 Gew.-% bis 6,0 Gew.-%, bezogen auf das Gewicht des statistischen Co-Polymers von Propylen, aufweist.

3. Die Polyolefin-Zusammensetzung nach Anspruch 1 oder 2, wobei das statistische Co-Polymer von Propylen eine Schmelzflussrate $MFR_2$ von 1,0 bis 50 g/10 min aufweist, vorzugsweise von 5,0 bis 15 g/10 min, gemessen bei 230 °C (2,16 kg) gemäß ISO 1133.

4. Die Polyolefin-Zusammensetzung nach einem der Ansprüche 1 bis 3, wobei das statistische Co-Polymer von Propylen zwei Schmelztemperaturen $T_m$ aufweist, die sich voneinander unterscheiden, bestimmt durch Differential-Scanning-Kalorimetrie gemäß ISO 11357-3.

5. Die Polyolefin-Zusammensetzung nach Anspruch 4, wobei die beiden Schmelztemperaturen $T_m$ des statistischen Co-Polymers von Propylen um mindestens 4,0 °C voneinander abweichen.

6. Die Polyolefin-Zusammensetzung nach einem der Ansprüche 1 bis 5, wobei das Polymer von 1-Buten eine Schmelzflussrate $MFR_2$ zwischen 2,0 g/10 min und 10 g/10 min, vorzugsweise zwischen 2,5 g/10 min und 8,0 g/10 min, weiter bevorzugt zwischen 3,0 und 6,0 g/10 min, gemessen bei 190 °C (2,16 kg) gemäß ISO 1133, aufweist.

7. Die Polyolefin-Zusammensetzung nach einem der Ansprüche 1 bis 8, wobei das Polymer von 1-Buten ein Massenmittel des Molekulargewichts $M_w$ von 150.000 bis 250.000 g/mol aufweist.

8. Die Polyolefin-Zusammensetzung nach einem der Ansprüche 1 bis 7, wobei das Polymer von 1-Buten eine Molekulargewichtsverteilung $M_w/M_n$ von unter 4,5 aufweist.

9. Eine Folie, vorzugsweise eine nicht orientierte Folie oder eine biaxial orientierte Folie, noch bevorzugter eine gegossene Folie, umfassend eine Polyolefin-Zusammensetzung nach einem der Ansprüche 1 bis 8.

10. Eine mehrschichtige Folie, umfassend eine Folie nach Anspruch 9 als Siegelschicht und mindestens eine, vorzugsweise zwei, weitere Folienschichten.

11. Verwendung eines Polymers von 1-Buten in einer Menge von 7,0 bis 12 Gew.-%, bezogen auf das Gewicht der Polyolefin-Zusammensetzung, in einer Polyolefin-Zusammensetzung, die 88 bis 93 Gew.-%, bezogen auf das Gewicht der Polyolefin-Zusammensetzung, eines statistischen Co-Polymers von Propylen umfasst, wobei das Co-Monomer in dem statistischen Co-Polymer von Propylen Ethylen ist und es nur ein Co-Monomer gibt, zur Verringerung der Heißsiegeltemperatur einer orientierten oder nicht orientierten Folie, die die Polyolefin-Zusammensetzung umfasst, um mindestens 5 °C, vorzugsweise um mindestens 8 °C, im Vergleich zu einer anderen Folie, die sich nur insofern unterscheidet, als die Polyolefin-Zusammensetzung kein Polymer von 1-Buten enthält, wobei

(A) das statistische Co-Polymer von Propylen

- einen Co-Monomer-Gehalt von 1,0 bis 10 Gew.-% hat, bezogen auf das Gewicht des statistischen Co-Polymers von Propylen, und
- einen Gehalt an in kaltem Xylol löslichen Stoffen von weniger als 10 Gew.-% hat,

und
(B) das Polymer von 1-Buten

- ein Massenmittel des Molekulargewichts $M_w$ von 100.000 bis 300.000 g/mol aufweist,
- eine Molekulargewichtsverteilung $M_w/M_n$ von unter 6,0 hat.

## Revendications

1. Composition de polyoléfine comprenant

(A) de 88 à 93 % en poids, par rapport au poids de la composition de polyoléfine, d'un copolymère statistique de propylène, dans laquelle le comonomère dans le copolymère statistique de propylène est l'éthylène et il n'y a qu'un seul comonomère, ayant

- une teneur en comonomère de 1,0 à 10 % en poids par rapport au poids du copolymère statistique de propylène, et

- une teneur en xylène soluble à froid inférieure à 10 % en poids, et

(B) 7,0 à 12 % en poids par rapport au poids de la composition de polyoléfine d'un polymère de 1-butène ayant

- une masse moléculaire moyenne en poids $M_w$ de 100 000 à 300 000 g/mol,
- une distribution de poids moléculaire $M_w/M_n$ inférieure à 6,0.

**2.** Composition de polyoléfine selon la revendication 1, dans laquelle le copolymère statistique de propylène a une teneur en comonomère de 2,0 à 10 % en poids, de préférence de 3,0 % en poids à 8,3 % en poids, davantage de préférence de 3,5 % en poids à 8,0 % en poids, encore davantage de préférence de 4,0 % en poids à 6,0 % en poids, sur la base du poids du copolymère statistique de propylène.

**3.** Composition de polyoléfine selon la revendication 1 ou 2, dans laquelle le copolymère statistique de propylène a un indice de fluidité à l'état fondu $MFR_2$ de 1,0 à 50 g/10 min, de préférence de 5,0 à 15 g/10 min, tel que mesuré à 230 °C (2,16 kg) selon la norme ISO 1133.

**4.** Composition de polyoléfine selon l'une des revendications 1 à 3, dans laquelle le copolymère statistique de propylène présente deux températures de fusion $T_m$ qui diffèrent l'une de l'autre telles que déterminées par calorimétrie différentielle à balayage selon la norme ISO 11357-3.

**5.** Composition de polyoléfine selon la revendication 4, dans laquelle les deux températures de fusion $T_m$ du copolymère statistique de propylène diffèrent l'une de l'autre d'au moins 4,0 °C.

**6.** Composition de polyoléfine selon l'une des revendications 1 à 5, dans laquelle le polymère de 1-butène a un indice de fluidité à l'état fondu $MFR_2$ entre 2,0 g/10 min et 10 g/10 min, de préférence entre 2,5 g/10 min et 8,0 g/10 min, de préférence encore entre 3,0 et 6,0 g/10 min tel que mesuré à 190 °C (2,16 kg) selon la norme ISO 1133.

**7.** Composition de polyoléfine selon l'une des revendications 1 à 8, dans laquelle le polymère de 1-butène a une masse moléculaire moyenne en poids $M_w$ de 150 000 à 250 000 g/mol.

**8.** Composition de polyoléfine selon l'une des revendications 1 à 7, dans laquelle le polymère de 1-butène a une distribution de poids moléculaire $M_w/M_n$ inférieure à 4,5.

**9.** Film, de préférence un film non orienté ou un film orienté de manière biaxiale, encore de préférence un film coulé, comprenant une composition de polyoléfine selon l'une des revendications 1 à 8.

**10.** Film multicouche comprenant un film selon la revendication 9 comme étant une couche d'étanchéité et au moins une, de préférence deux, couches de film supplémentaires.

**11.** Utilisation d'un polymère de 1-butène en une quantité de 7,0 à 12 % en poids par rapport au poids de la composition de polyoléfine dans une composition de polyoléfine comprenant 88 à 93 % en poids par rapport au poids de la composition de polyoléfine d'un copolymère statistique de propylène, dans laquelle le comonomère dans le copolymère statistique de propylène est l'éthylène et il n'y a qu'un seul comonomère, pour réduire la température d'initiation d'étanchéité d'un film orienté ou non orienté comprenant la composition de polyoléfine d'au moins 5 °C, de préférence d'au moins 8 °C, par rapport à un autre film qui est différent uniquement dans la mesure où la composition de polyoléfine ne contient pas de polymère de 1-butène, dans laquelle

(A) le copolymère statistique de propylène a

- une teneur en comonomère de 1,0 à 10 % en poids par rapport au poids du copolymère statistique de propylène, et
- une teneur en xylène soluble à froid inférieure à 10 % en poids, et

(B) le polymère de 1-butène a

- une masse moléculaire moyenne en poids $M_w$ de 100 000 à 300 000 g/mol,
- une distribution de poids moléculaire $M_w/M_n$ inférieure à 6,0.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011036077 A1
- EP 2896651 A1
- WO 2012031953 A1
- EP 2808352 A1
- WO 2014191506 A1
- EP 0887379 A
- WO 9212182 A
- WO 03000754 A
- WO 03000757 A
- WO 2007077027 A
- EP 2251361 A
- WO 2004029112 A
- WO 2004029112 A1

### Non-patent literature cited in the description

- *CHEMICAL ABSTRACTS,* 6683-19-8
- *CHEMICAL ABSTRACTS,* 31570-04-4
- *CHEMICAL ABSTRACTS,* 693-36-7
- *CHEMICAL ABSTRACTS,* 11097-59-9
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 97593-29-8
- **NELLO PASQUINI.** polypropylene handbook. Hanser